# FASCICULE DE BREVET EUROPEEN

(11) **EP 2 549 147 B1**
(45) Date de publication et mention de la délivrance du brevet: **05.11.2014**
(21) Numéro de dépôt: 12177078.8
(22) Date de dépôt: 19.07.2012
(51) Int. Cl.: F16H 55/06

(54) **Roue d'engrenage d'un réducteur à vis sans fin**
Zahnrad eines Reduziergetriebes mit Schnecke
Gear wheel for worm reducer

(30) Priorité: 21.07.2011 FR 1156603
(43) Date de publication de la demande: 23.01.2013
(73) Titulaire: Jtekt Europe, 69540 Irigny (FR)
(72) Inventeur: Besnault, Vianney, 69520 GRIGNY (FR); Chauvrat, Philippe, 01480 VILLENEUVE (FR); Plataret, Nicolas, 69630 CHAPONOST (FR); Goutagny, Mathieu, 69110 SAINTE-FOY-LES-LYON (FR)
(74) Mandataire: Chevalier, Renaud Philippe

(56) Documents cités:
- WO-A2-2008/000220
- DE-A1- 10 119 235
- DE-A1-102008 000 431
- FR-A6- 2 161 284
- US-A- 3 999 445
- US-A1- 2002 178 853
- US-A1- 2008 146 402

## Description

La présente invention se rapporte à une roue d'engrenage d'un réducteur à vis sans fin.

Une roue d'engrenage d'un réducteur à vis sans fin connue de l'état de la technique comporte :
- un moyeu métallique,
- une denture dite externe agencée en périphérie du moyeu, la denture externe étant réalisée dans un matériau plastique. US 2002/0178853 divulgue une roue d'engrenage avec les caractéristiques du préambule de la revendication 1.

La réalisation de la denture externe dans un matériau plastique est particulièrement avantageuse relativement à une denture externe métallique dans la mesure où elle permet de réduire significativement les bruits d'engrènement sous efforts.

La denture externe d'une telle roue d'engrenage de l'état de la technique subit des efforts d'engrènement importants avec la vis sans fin, notamment dans le domaine technique des directions assistées électriques pour véhicules automobiles où les contraintes d'encombrement et d'effort d'assistance sont primordiales.

Ces efforts d'engrènement importants conduisent à différents modes de casse de la denture externe, la rupture en pied de dent étant le mode de casse le plus usuel.

Par ailleurs, les matériaux plastiques utilisés actuellement, notamment dans le domaine technique des directions assistées électriques pour véhicules automobiles, arrivent à leur limite de performance.

La présente invention vise à remédier en tout ou partie aux inconvénients précités et concerne une roue d'engrenage d'un réducteur à vis sans fin, la roue d'engrenage comportant :
- un moyeu présentant une zone périphérique,
- une denture dite externe réalisée dans un matériau plastique, la denture externe étant destinée à être en prise avec la vis sans fin, la denture externe présentant un cercle de pied,
la roue d'engrenage étant remarquable en ce que la zone périphérique du moyeu comporte une denture dite interne présentant un alignement radial avec la denture externe de manière à transférer des efforts d'engrènement de la denture externe vers le moyeu, et en ce que la denture interne du moyeu présente une section radiale comprenant une zone d'étranglement agencée sensiblement à la hauteur radiale du cercle de pied de la denture externe.

Ainsi, une telle denture interne du moyeu permet d'améliorer la tenue mécanique de la denture externe tout en conservant une réalisation de ladite denture externe dans un matériau plastique avec des bruits d'engrènement sous efforts réduits. L'amélioration de la tenue mécanique provient du transfert des efforts d'engrènement de la denture externe vers le moyeu.

En outre, la présence d'une telle zone d'étranglement permet d'éviter une rigidification trop importante de la denture externe en lui conférant une certaine flexibilité.

Par ailleurs, une telle zone d'étranglement garantit un bon accrochage radial du matériau plastique de la denture externe sur la denture interne du moyeu. Toute propension de la denture externe à fluer vers l'extérieur est donc limitée, améliorant ainsi la tenue en fatigue de l'engrenage.

Dans un mode de réalisation de l'invention, la zone d'étranglement présente une épaisseur suivant une direction orthoradiale inférieure à 30 % de la hauteur radiale de la denture externe.

Dans un mode de réalisation de l'invention, le matériau plastique de la denture externe présente un module d'élasticité prédéterminé, et le moyeu est réalisé dans un matériau présentant un module d'élasticité supérieur au module d'élasticité dudit matériau plastique.

Un tel choix de matériau pour le moyeu permet d'améliorer l'efficacité du transfert des efforts d'engrènement de la denture externe vers le moyeu.

Selon une forme d'exécution de l'invention, la denture externe recouvre entièrement la denture interne du moyeu.

Ainsi, le sommet de la denture interne n'est pas apparent, ce qui garantit une bonne tenue mécanique, thermique et dans le temps de l'engrenage.

Selon l'invention, les dents de la denture interne du moyeu comportent chacune une partie axiale présentant :
- deux portions d'extrémité rectilignes s'étendant sensiblement parallèlement à l'axe de rotation de la roue d'engrenage,
- une portion centrale reliant les deux portions d'extrémité entre elles, la portion centrale étant inclinée relativement à l'axe de rotation de la roue d'engrenage.

Une telle denture interne du moyeu possède un comportement mécanique proche d'une denture hélicoïdale, l'inclinaison de la portion centrale correspondant à l'angle d'hélice. Une telle denture interne du moyeu est particulièrement avantageuse comparativement à une denture strictement hélicoïdale dans la mesure où elle est beaucoup plus simple à fabriquer par moulage. En effet, un moule d'injection pour une denture hélicoïdale à fort angle d'hélice et/ou forte largeur axiale de roue d'engrenage est extrêmement complexe et coûteux notamment pour réaliser le mouvement d'hélice suivant l'axe de rotation de l'engrenage.

Avantageusement, la plus grande distance séparant les portions d'extrémité de deux dents adjacentes de la denture interne du moyeu est strictement supérieure à la somme des plus grandes distances séparant les portions d'extrémité de chacune desdites dents adjacentes, lesdites distances étant mesurées suivant une direction orthoradiale.

Une telle configuration géométrique de la denture interne du moyeu permet de définir un interstice axial continu entre deux dents adjacentes, l'interstice s'étendant suivant l'axe de rotation de la roue d'engrenage. Une telle configuration géométrique garantit un démoulage aisé dans l'axe de rotation de la roue d'engrenage.

Avantageusement, la denture interne du moyeu présente une hauteur radiale sensiblement égale à la hauteur radiale de la denture externe.

Une telle configuration géométrique permet d'obtenir des têtes de la denture interne du moyeu et de la denture externe suffisamment proches pour améliorer l'efficacité du transfert des efforts d'engrènement de la denture externe vers le moyeu.

Selon une caractéristique avantageuse de l'invention, le moyeu est réalisé dans un matériau plastique comportant au moins une charge sélectionnée dans le groupe comportant les fibres de verre et les fibres de carbone.

Un tel matériau plastique du moyeu permet d'adapter la flexibilité sous charge du moyeu en augmentant le nombre de dents de la denture interne sous charge et diminuant la contrainte en pied de dent.

Selon une forme d'exécution de l'invention, le moyeu présente un rayon de raccordement en pied de dent de la denture interne compris entre 5 % et 20 % de la hauteur radiale de la denture interne.

Un tel rayon de raccordement garantit une bonne tenue mécanique de la denture interne du moyeu.

D'autres caractéristiques et avantages apparaîtront dans la description qui va suivre de différents modes de réalisation d'une roue d'engrenage selon l'invention, donnés à titre d'exemples non limitatifs, en référence aux dessins annexés dans lesquels :
- la figure 1 est une vue partielle en coupe radiale d'une roue d'engrenage selon un premier mode de réalisation,
- la figure 2 est une vue à échelle agrandie de la roue d'engrenage illustrée à la figure 1,
- la figure 3 est une vue partielle en coupe radiale d'une roue d'engrenage selon un deuxième mode de réalisation,
- la figure 4 est une vue de dessus d'une roue d'engrenage selon l'invention représentant une denture interne hélicoïdale du moyeu,
- la figure 5 est une vue analogue à la figure 4 représentant une denture interne du moyeu selon l'invention possédant un comportement mécanique proche d'une denture hélicoïdale.

Pour les différents modes de réalisation, les mêmes références seront utilisées pour des éléments identiques ou assurant la même fonction, par souci de simplification de la description.

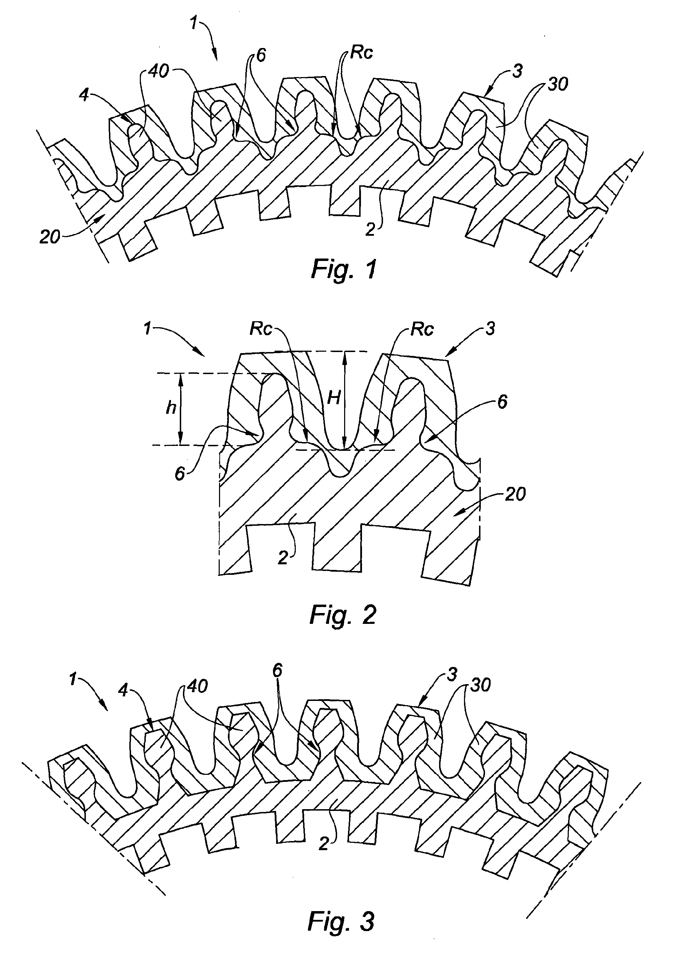

La roue d'engrenage 1 d'un réducteur à vis sans fin illustrée aux figures 1 et 2 comporte :
- un moyeu 2 présentant une zone périphérique 20,
- une denture dite externe 3 réalisée dans un matériau plastique, la denture externe 3 étant destinée à être en prise avec la vis sans fin (non représentée) du réducteur.

La denture externe 3 comporte un ensemble de dents 30 régulièrement réparties circonférentiellement. La denture externe 3 est de type denture droite.

Le matériau plastique dans lequel est réalisée la denture externe 3 est de préférence un polymère sélectionné dans le groupe comportant les polymères thermoplastiques, les élastomères caoutchoutiques, les élastomères thermoplastiques ou des composites élastomériques. Ce matériau plastique peut comporter des charges organiques ou inorganiques, et/ou métalliques pour assurer une action de rigidification et/ou une fonction de lubrification de l'engrenage.

La zone périphérique 20 du moyeu 2 comporte une denture dite interne 4 présentant un alignement radial avec la denture externe 3 de manière à transférer des efforts d'engrènement de la denture externe 3 vers le moyeu 2. Par « radial », on entend une direction s'étendant suivant un rayon de la roue d'engrenage 1.

La denture interne 4 du moyeu 2 comporte un ensemble de dents 40 régulièrement réparties circonférentiellement. La denture interne 4 est de type denture droite. Chaque dent 40 de la denture interne 4 présente une section radiale comprenant une zone d'étranglement 6 agencée sensiblement à la hauteur radiale du cercle de pied de la denture externe 3. La tête de chaque dent 40 de la denture interne 4 est légèrement bombée.

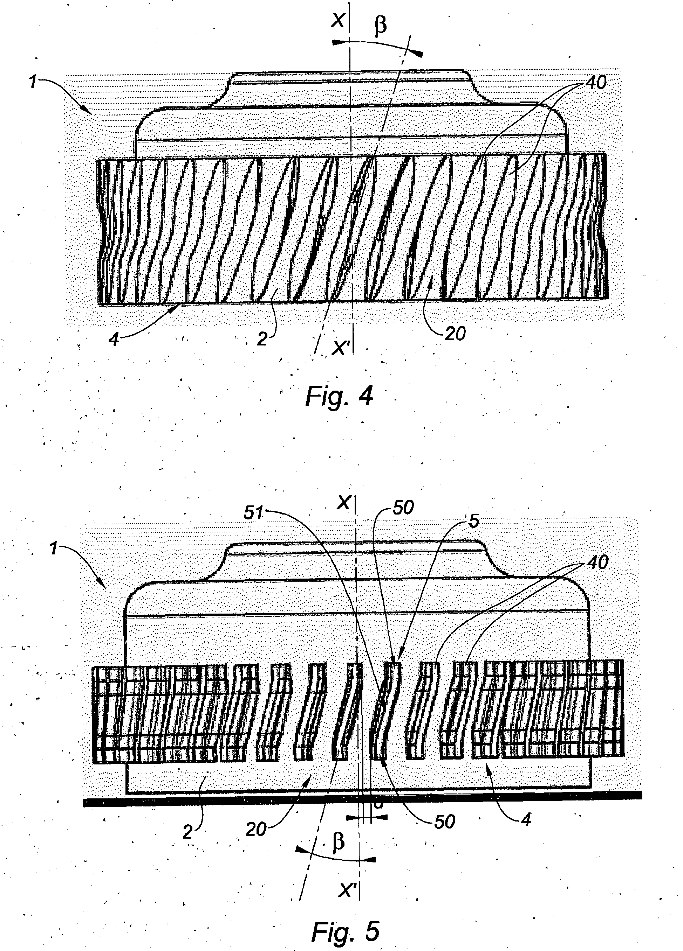

La zone d'étranglement 6 présente une épaisseur suivant une direction orthoradiale inférieure à 30 % de la hauteur radiale H de la denture externe 3. Par « orthoradiale », on entend une direction perpendiculaire à la direction radiale et à l'axe de rotation X'-X de la roue d'engrenage 1, l'axe de rotation X'-X étant matérialisé aux figures 4 et 5.

En outre, le moyeu 2 présente un rayon de raccordement Rc en pied de dent de la denture interne 4 pouvant être compris entre 5 % et 20 % de la hauteur radiale H de la denture interne 4.

Le matériau plastique de la denture externe 3 présente un module d'élasticité prédéterminé. Le moyeu 2 peut être réalisé dans un matériau, tel qu'un matériau plastique, présentant un module d'élasticité supérieur au module d'élasticité dudit matériau plastique de la denture externe 3. Le moyeu 2 peut être réalisé dans un matériau plastique comportant au moins une charge sélectionnée dans le groupe comportant les fibres de verre et les fibres de carbone.

La denture externe 3 est agencée sur la denture interne 4 du moyeu 2. Préférentiellement, la denture externe 3 recouvre entièrement la denture interne 4 du moyeu 2.

La denture interne 4 du moyeu 2 présente une hauteur radiale h sensiblement égale à la hauteur radiale H de la denture externe 3.

Dans le mode de réalisation illustré à la figure 3, la roue d'engrenage 1 diffère de la roue d'engrenage 1 illustrée aux figures 1 et 2 en ce que :
- la tête de chaque dent 40 de la denture interne 4 est droite,
- la zone de raccordement en pied de dent entre le moyeu 2 et la denture interne 4 est sensiblement rectiligne.

En figure 4 est illustrée une denture interne 4 d'un moyeu 2 de type hélicoïdale présentant un angle d'hélice β.

Dans le mode de réalisation illustré à la figure 5, les dents 40 de la denture interne 4 du moyeu 2 comportent chacune une partie axiale 5 présentant :
- deux portions d'extrémité 50 rectilignes s'étendant sensiblement parallèlement à l'axe de rotation X'-X de la roue d'engrenage 1,
- une portion centrale 51 reliant les deux portions d'extrémité 50 entre elles, la portion centrale 51 étant inclinée relativement à l'axe de rotation X'-X de la roue d'engrenage 1 de manière à former l'angle d'hélice β.

Par « axiale », on entend une direction s'étendant suivant l'axe de rotation X'-X de la roue d'engrenage 1.

La plus grande distance séparant les portions d'extrémité 50 de deux dents 40 adjacentes de la denture interne 4 du moyeu 2 est strictement supérieure à la somme des plus grandes distances séparant les portions d'extrémité 50 de chacune desdites dents 40 adjacentes, lesdites distances étant mesurées suivant une direction orthoradiale. En d'autres termes, la denture interne 4 du moyeu 2 définit un interstice axial continu de largeur d entre deux dents 40 adjacentes, l'interstice s'étendant suivant l'axe de rotation X'-X de la roue d'engrenage 1.

Bien entendu, les modes de réalisation de l'invention décrits ci-dessus ne présentent aucun caractère limitatif. Des détails et améliorations peuvent y être apportés dans d'autres variantes d'exécution sans pour autant sortir du cadre de l'invention, telle que définie dans les revendications annexées.

## Revendications

1. Roue d'engrenage (1) d'un réducteur à vis sans fin, la roue d'engrenage (1) comportant :
- un moyeu (2) présentant une zone périphérique (20),
- une denture dite externe (3) réalisée dans un matériau plastique, la denture externe (3) étant destinée à être en prise avec la vis sans fin, la denture externe présentant un cercle de pied,
la roue d'engrenage (1) étant **caractérisée en ce que** la zone périphérique (20) du moyeu (2) comporte une denture dite interne (4) comprenant un ensemble de dents (40) régulièrement réparties circonférentiellement et présentant un alignement radial avec la denture externe (3) de manière à transférer des efforts d'engrènement de la denture externe (3) vers le moyeu (2), et **en ce que** la denture interne (4) du moyeu (2) présente une section radiale comprenant une zone d'étranglement (6) agencée sensiblement à la hauteur radiale du cercle de pied de la denture externe (3) et **en ce que** les dents (40) de la denture interne (4) du moyeu (2) comportent chacune une partie axiale (5) présentant :
- deux portions d'extrémité (50) rectilignes s'étendant sensiblement parallèlement à l'axe de rotation (X'-X) de la roue d'engrenage (1),
- une portion centrale (51) reliant les deux portions d'extrémité (50) entre elles, la portion centrale (51) étant inclinée relativement à l'axe de rotation (X'-X) de la roue d'engrenage (1).

2. Roue d'engrenage (1) selon la revendication 1, **caractérisée en ce que** la zone d'étranglement (6) présente une épaisseur suivant une direction orthoradiale inférieure à 30 % de la hauteur radiale (H) de la denture externe (3).

3. Roue d'engrenage (1) selon la revendication 1 ou 2, **caractérisée en ce que** le matériau plastique de la denture externe (3) présente un module d'élasticité prédéterminé, et **en ce que** le moyeu (2) est réalisé dans un matériau présentant un module d'élasticité supérieur au module d'élasticité dudit matériau plastique.

4. Roue d'engrenage (1) selon l'une des revendications 1 à 3, **caractérisée en ce que** la denture externe (3) recouvre entièrement la denture interne (4) du moyeu (2).

5. Roue d'engrenage (1) selon l'une des revendications 1 à 4, **caractérisée en ce que** la plus grande distance séparant les portions d'extrémité (50) de deux dents (40) adjacentes de la denture interne (4) du moyeu (2) est strictement supérieure à la somme des plus grandes distances séparant les portions d'extrémité (50) de chacune desdites dents (40) adjacentes, lesdites distances étant mesurées suivant une direction orthoradiale.

6. Roue d'engrenage (1) selon l'une des revendications 1 à 5, **caractérisée en ce que** la denture interne (4) du moyeu (2) présente une hauteur radiale (h) sensiblement égale à la hauteur radiale (H) de la denture externe (3).

7. Roue d'engrenage (1) selon l'une des revendications 1 à 6, **caractérisée en ce que** le moyeu (2) est réalisé dans un matériau plastique comportant au moins une charge sélectionnée dans le groupe comportant les fibres de verre et les fibres de carbone.

8. Roue d'engrenage (1) selon l'une des revendications 1 à 7, **caractérisée en ce que** le moyeu (2) présente un rayon de raccordement (Rc) en pied de dent de la denture interne (4) compris entre 5 et 20% de la hauteur radiale (H) de la denture interne (4).

## Patentansprüche

1. Getrieberad (1) eines Schneckengetriebes, wobei das Getrieberad folgendes umfasst:
- eine Nabe (2) mit einem Randbereich (20),
- eine extern genannte Verzahnung (3), die aus einem Kunststoffmaterial ausgeführt ist, wobei die externe Verzahnung (3) dazu bestimmt ist, mit der Schnecke in Eingriff zu stehen, und die externe Verzahnung einen Fußkreis aufweist,
wobei das Getrieberad (1) **dadurch gekennzeichnet ist, dass** der Randbereich (20) der Nabe (2) eine intern genannte Verzahnung (4) mit einer Einheit an Zähnen (40) umfasst, die gleichmäßig über den Umfang verteilt sind, und eine radiale Ausrichtung mit der externen Verzahnung (3) aufweisen, sodass die Eingriffskräfte der externen Verzahnung (3) auf die Nabe (2) übertragen werden, und dadurch, dass die interne Verzahnung (4) der Nabe (2) einen radialen Querschnitt mit einer Verengungszone (6) umfasst, die in etwa auf der radialen Höhe des Fußkreises der externen Verzahnung (3) angeordnet ist, und dadurch, dass die Zähne (40) der internen Verzahnung (4) der Nabe (2) jeweils einen axialen Abschnitt (5) enthalten, der folgendes aufweist:
- zwei geradlinige Endabschnitte (50), die sich in etwa parallel zur Drehachse (X'-X) des Getrieberads (1) erstrecken,
- einen mittleren Abschnitt (51), der die beiden Endabschnitte (50) miteinander verbindet, wobei der mittlere Abschnitt (51) im Verhältnis zur Drehachse (X'-X) des Getrieberads (1) schräg gestellt ist.

2. Getrieberad (1) nach Anspruch 1, **dadurch gekennzeichnet, dass** die Verengungszone (6) eine Dicke in eine orthoradiale Richtung aufweist, die kleiner als 30% der radialen Höhe (H) der externen Verzahnung (3) ist.

3. Getrieberad (1) nach Anspruch 1 oder 2, **dadurch gekennzeichnet, dass** das Kunststoffmaterial der externen Verzahnung (3) ein vorbestimmtes Elastizitätsmodul aufweist, und dadurch, dass die Nabe (2) aus einem Material gefertigt ist, welches ein größeres Elastizitätsmodul aufweist, als das Elastizitätsmodul des besagten Kunststoffmaterials.

4. Getrieberad (1) nach einem der Ansprüche 1 bis 3, **dadurch gekennzeichnet, dass** die externe Verzahnung (3) die interne Verzahnung (4) der Nabe (2) vollständig abdeckt.

5. Getrieberad (1) nach einem der Ansprüche 1 bis 4, **dadurch gekennzeichnet, dass** der größere Abstand zwischen den Endabschnitten (50) zweier benachbarter Zähne (40) der internen Verzahnung (4) der Nabe (2) streng größer ist, als die Summe der größeren Abstände zwischen den Endabschnitten (50) jedes der besagten benachbarten Zähne (40), wobei die besagten Abstände in einer orthoradialen Richtung gemessen werden.

6. Getrieberad (1) nach einem der Ansprüche 1 bis 5, **dadurch gekennzeichnet, dass** die interne Verzahnung (4) der Nabe (2) eine radiale Höhe (h) aufweist, die in etwa gleich der radialen Höhe (H) der externen Verzahnung (3) ist.

7. Getrieberad (1) nach einem der Ansprüche 1 bis 6, **dadurch gekennzeichnet, dass** die Nabe (2) aus einem Kunststoffmaterial gefertigt ist, das zumindest eine Belastung aufweist, die aus einer Gruppe ausgewählt wird, die Glasfasern und Kohlefasern umfasst.

8. Getrieberad (1) nach einem der Ansprüche 1 bis 7, **dadurch gekennzeichnet, dass** die Nabe (2) einen Übergangsradius (Rc) am Zahnfuß der internen Verzahnung (4) aufweist, der zwischen 5 und 20% der radialen Höhe (H) der internen Verzahnung (4) liegt.

## Claims

1. A gear wheel (1) of a worm reducer, the gear wheel (1) including :
- a hub (2) exhibiting a peripheral area (20),
- a toothing so-called outer toothing (3) made of a plastic material, the outer toothing (3) being intended to be engaged with the worm screw, the outer toothing exhibiting a root circle,
the gear wheel (1) being **characterized in that** the peripheral area (20) of the hub (2) includes a toothing so-called inner toothing (4) comprising a set of teeth (40) evenly distributed circumferentially and exhibiting a radial alignment with the outer toothing (3) so as to transfer the meshing forces from the outer toothing (3) toward the hub (2), and **in that** the inner toothing (4) of the hub (2) exhibits a radial section comprising a constriction area (6) arranged substantially at the radial height of the root circle of the outer toothing (3) and **in that** each one of the teeth (40) of the inner toothing (4) of the hub (2) includes an axial portion (5) exhibiting :
- two rectilinear end portions (50) extending substantially parallel to the rotation axis (X'-X) of the gear wheel (1),
- a central portion (51) connecting the two end portions (50) therebetween, the central portion (51) being titled relative to the rotation axis (X'-X) of the gear wheel (1).

2. The gear wheel (1) according to claim 1, **characterized in that** the constriction area (6) exhibits a thickness along an orthoradial direction lower than 30% of the radial height (H) of the outer toothing (3).

3. The gear wheel (1) according to claim 1 or 2, **characterized in that** the plastic material of the outer toothing (3) exhibits a predetermined elasticity modulus, and **in that** the hub (2) is made of a material exhibiting an elasticity modulus higher than the elasticity modulus of said plastic material.

4. The gear wheel (1) according to any of claims 1 to 3, **characterized in that** the outer toothing (3) entirely covers the inner toothing (4) of the hub (2).

5. The gear wheel (1) according to any of claims 1 to 4, **characterized in that** the largest distance separating the end portions (50) of two adjacent teeth (40) of the inner toothing (4) of the hub (2) is strictly higher than the sum of the largest distances separating the end portions (50) of each one of said adjacent teeth (40), said distances being measured along an orthoradial direction.

6. The gear wheel (1) according to any of claims 1 to 5, **characterized in that** the inner toothing (4) of the hub (2) exhibits a radial height (h) substantially equal to the radial height (H) of the outer toothing (3).

7. The gear wheel (1) according to any of claims 1 to 6, **characterized in that** the hub (2) is made of a plastic material including at least one filler selected in the group including glass fibers and carbon fibers.

8. The gear wheel (1) according to any of claims 1 to 7, **characterized in that** the hub (2) exhibits a connecting radius (Rc) at the tooth root of the inner toothing (4) comprised between 5 and 20% of the radial height (H) of the inner toothing (4).
